# EUROPEAN PATENT APPLICATION

(11) **EP 1 914 922 A1**
(43) Date of publication of application: **23.04.2008**
(21) Application number: 06291603.6
(22) Date of filing: 16.10.2006
(51) Int. Cl.: H04L 1/18

(54) **Intelligent IPTV retransmission request**

(71) Applicant: Alcatel Lucent, 75008 Paris (FR)
(72) Inventor: Van Leekwijck, Werner Adriaan Josephine, 2610 Antwerp (BE); Van Caenegem, Tom, 9820 Schelderode (BE); Struyve, Kris, 8400 Oostende (BE); Tsang, Ing-Jyh, 9250 Waasmunster (BE)
(74) Representative: Narmon, Gisèle Marie Thérèse

(57) **Abstract**

An IPTV system with a video distribution server (DS) adapted to transmit video packets to a client (CL) via a network. The client comprises a packet reception controller (PRC) for detecting problems with video packets received from the video distribution server and adapted to request retransmission of a video packet associated to the problem, whilst the video distribution server comprises a packet transmission controller (PTC) for keeping the video packets transmitted to the client and adapted to retransmit a video packet upon request of the client. The packet transmission controller is further adapted to associate to each video packet at least one parameter indicative of the relative importance of this current video packet or/and of the next video packet in the transmission sequence, whilst the packet reception controller is further adapted to request the retransmission of the current video packet, of the next video packet or of both video packets based on this parameter. The main idea is to carry in each packet not only the type or importance of the current packet, but also that of the next packet (or alternatively only that of the next packet). Upon missing a packet or upon reception of a damaged packet, the client can then decide to request retransmission or not based on the knowledge of the importance of the missed or damaged packet that can be learned by looking at the parameter.

## Description

The present invention relates to an IPTV system with a video distribution server adapted to transmit video packets to a client via a network, said client comprising a packet reception controller for detecting problems with video packets received from said video distribution server and adapted to request retransmission of a video packet associated to said problem, and said video distribution server comprising a packet transmission controller for keeping the video packets transmitted to said client and adapted to retransmit a video packet upon request of said client.

Such an IPTV system is generally known in the art. Therein, to obtain a good quality of experience for IPTV, problems such as receiving defective packets or packet loss should be limited to a minimum. One way of achieving this involves the video distribution server which keeps part of the already transmitted packets in a memory, and a client that can detect when a packet has been lost. The client then requests retransmission of the specific packet to the D-server.

The distribution server can grant or refuse the request for retransmission, based on network load, e.g. if congestion exists, and the importance of the packet that it has in memory. However, if the distribution server decides not to retransmit the packet, e.g. since it is not an important packet, and bandwidth is scarce, it still has to inform the client about that decision, typically by using a small control packet or an empty packet, or expect subsequent retransmission requests from the client for the same packet.

A drawback of this known system is that the requests for the retransmission, as well as the retransmission itself, requires network (bandwidth) and processing (distribution server) resources.

An object of the present invention is to provide an IPTV system of the above known type but wherein, after detection of a problem, the client is allowed to decide to request or not the retransmission of a specific packet, reducing thereby the network and processing resources, while keeping a good quality of video transmission.

According to the invention, this object is achieved due to the fact that said packet transmission controller is further adapted to associate to each video packet a parameter indicative of the relative importance of the next video packet in the transmission sequence, and that said packet reception controller is further adapted to request the retransmission of said next video packet based on said parameter.

In this way, the importance of the missed (next) video packet can be learned by looking at the parameter carried by the current, i.e. previous, video packet. The client can then decide to request retransmission or not based on this knowledge.

Typically, not all packets in a video stream or transmission sequence are of equal importance for the quality of the picture. For instance, when the stream consists of I-, B- and P-frames, the latter are less important than the other frames.

The capabilities of the client, and even the scene being played, can thus be used in the decision process to request the retransmission or not.

In a variant of the invention, this object is also achieved due to the fact that said packet transmission controller is further adapted to associate to each video packet a parameter indicative of the relative importance of this current video packet in the transmission sequence, and that said packet reception controller is further adapted to request the retransmission of said current video packet based on said parameter.

In this way, when a video packet is received, i.e. not lost, but damaged or defective, the client may request its retransmission by taking into account the importance of this current packet.

In another variant of the invention, this object is also achieved due to the fact that packet transmission controller is further adapted to associate to each video packet a parameter indicative of the relative importance of this current video packet and of the next video packet in the transmission sequence, and in that said packet reception controller is further adapted to request the retransmission of said current video packet, of said next video packet or of both video packets based on said parameter.

In this way, when a damaged or defective video packet is received, the client may take into account the parameter associated to this current packet for requesting either the retransmission of this current video packet, the retransmission of the next video packet of the stream or both these current and next video packets.

The main idea of the present invention is to carry in each packet not only the type or importance of that packet, but also of the next packet (or alternatively without carrying the importance of that current packet, but only of the next packet as mentioned above). Upon missing a packet or upon reception of a damaged packet, the client can then decide to request retransmission or not based on the knowledge of the importance of the missed or damaged packet that can be learned by looking at the parameter.

Since packets of lower importance to the client are not requested to be retransmitted, a lower usage of the network bandwidth is achieved.

The present invention also relates to a method for requesting retransmission of video packets by a client in an IPTV system comprising a video distribution server transmitting video packets to said client via a network, the method comprising the steps of:
- said client requesting the retransmission of a packet upon detection of a problem, and
- said video distribution server keeping the video packets transmitted to said client and retransmitting a packet upon request of said client.

A further object of the present invention is to improve this method so that, after detection of a problem, the client is allowed to decide to request or not the retransmission of a specific packet, reducing thereby the network and processing resources, while keeping a good quality of video transmission as explained above.

According to the invention, this object is achieved due to the fact that said method further comprises the steps of:
- including in each transmitted video packet a parameter indicative of the relative importance of this current video packet, of the next video packet in the transmission sequence, or of both, and
- said client requesting, based on said parameter, the retransmission of said current video packet, of the next video packet in the transmission sequence, or of both.

Since the importance of the video packets is carried within the packets as a parameter, the client is allowed to decide therefrom whether the retransmission of a packet should be requested or not. Packets of lower importance to the client should not be requested for retransmission so that a lower usage of the network bandwidth can be achieved. Further characterizing embodiments of the present IPTV system, the packet transmission controller and the packet reception controller used therein as well as the method for requesting retransmission of video packets used thereby are mentioned in the appended claims.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

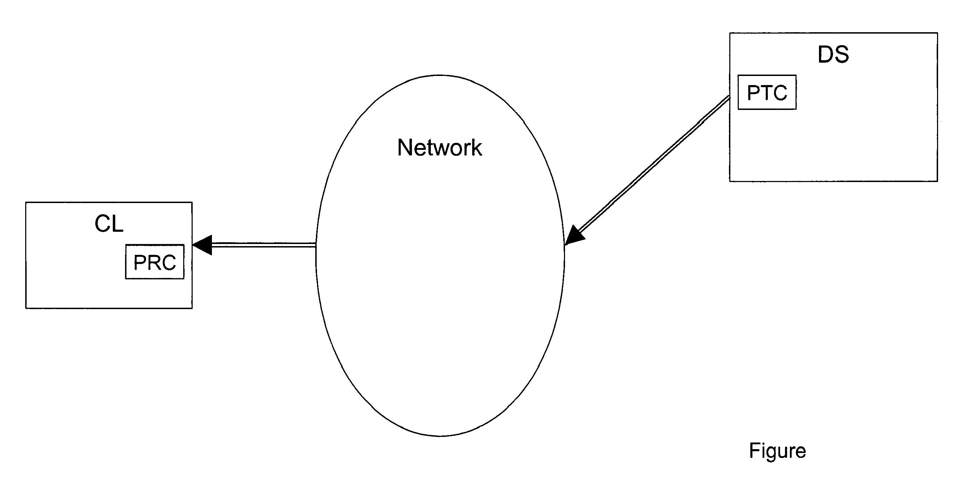

The above and other objects and features of the invention will become more apparent and the invention itself will be best understood by referring to the following description of an embodiment taken in conjunction with the accompanying drawings wherein the Figure represents an IPTV system according to the invention.

The IPTV system shown at the Figure comprises a video distribution server DS adapted to transmit video packets to a client CL via a network, preferably an IP network.

On the one hand, the client CL includes a packet reception controller PRC able to detect problems with video packets received from the video distribution server and to request the retransmission of a video packet associated to this problem. Such a problem may be a damaged, a defective or a missing video packet in the video stream or transmission sequence.

On the other hand, the video distribution server DS includes a packet transmission controller PTC able to keep the video packets transmitted to the client CL and to retransmit one or more video packets upon request of this client CL.

The packet transmission controller PTC further associates to each video packet that it transmits at least one parameter indicative of the relative importance either of the next video packet in the transmission sequence, of the current packet or of both.

This parameter is analyzed by the packet reception controller PRC of the client CL. Upon missing a packet or receiving a damaged video packet, the client CL or its packet reception controller PRC can then decide to request retransmission or not based on the knowledge of the importance of the missed packet. This importance is known by looking at the parameter of the current or of the previous video packet.

The packet transmission controller PTC may also associate to each video packet that it transmits other parameters such as the priority of the video packet, the server or terminal capabilities, the load of the network and/or the scene currently played.

The client CL, and more particularly the packet reception controller PRC thereof, has local intelligence to request retransmission or not of a video packet based on these other parameters combined or not with the above mentions parameters.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. An IPTV system with a video distribution server (DS) adapted to transmit video packets to a client (CL) via a network,
said client comprising a packet reception controller (PRC) for detecting problems with video packets received from said video distribution server and adapted to request retransmission of a video packet associated to said problem, and
said video distribution server comprising a packet transmission controller (PTC) for keeping the video packets transmitted to said client and adapted to retransmit a video packet upon request of said client,
***characterized in that*** said packet transmission controller (PTC) is further adapted to associate to each video packet a parameter indicative of the relative importance of the next video packet in the transmission sequence,
***and in that*** said packet reception controller (PRC) is further adapted to request the retransmission of said next video packet based on said parameter.

2. An IPTV system with a video distribution server (DS) adapted to transmit video packets to a client (CL) via a network,
said client comprising a packet reception controller (PRC) for detecting problems with video packets received from said video distribution server and adapted to request retransmission of a video packet associated to said problem, and
said video distribution server comprising a packet transmission controller (PTC) for keeping the video packets transmitted to said client and adapted to retransmit a video packet upon request of said client,
***characterized in that*** said packet transmission controller (PTC) is further adapted to associate to each video packet a parameter indicative of the relative importance of this current video packet in the transmission sequence,
***and in that*** said packet reception controller (PRC) is further adapted to request the retransmission of said current video packet based on said parameter.

3. An IPTV system with a video distribution server (DS) adapted to transmit video packets to a client (CL) via a network,
said client comprising a packet reception controller (PRC) for detecting problems with video packets received from said video distribution server and adapted to request retransmission of a video packet associated to said problem, and
said video distribution server comprising a packet transmission controller (PTC) for keeping the video packets transmitted to said client and adapted to retransmit a video packet upon request of said client,
***characterized in that*** said packet transmission controller (PTC) is further adapted to associate to each video packet a parameter indicative of the relative importance of this current video packet and of the next video packet in the transmission sequence,
***and in that*** said packet reception controller (PRC) is further adapted to request the retransmission of said current video packet, of said next video packet or of both video packets based on said parameter.

4. The IPTV system according to any of the claims 1, 2 or 3,
***characterized in that*** said packet transmission controller (PTC) is further adapted to associate to each video packet other parameters, such as the priority of said packet, the server capabilities, the load of said network and/or the scene currently played,
***and in that*** said packet reception controller (PRC) is further adapted to request the retransmission of a video packet based on said other parameters.

5. A packet transmission controller (PTC) for a video distribution server (DS) of an IPTV system wherein video packets are transmitted from said video distribution server to a client (CL) via a network,
said packet transmission controller being adapted to keep the video packets transmitted to said client and to retransmit a video packet upon request of said client,
***characterized in that*** said packet transmission controller (PTC) is further adapted to associate to each video packet a parameter indicative of the relative importance of the next video packet in the transmission sequence.

6. A packet transmission controller (PTC) for a video distribution server (DS) of an IPTV system wherein video packets are transmitted from said video distribution server to a client (CL) via a network,
said packet transmission controller being adapted to keep the video packets transmitted to said client and to retransmit a video packet upon request of said client,
***characterized in that*** said packet transmission controller (PTC) is further adapted to associate to each video packet a parameter indicative of the relative importance of this current video packet in the transmission sequence.

7. A packet reception controller (PRC) for a client (CL) of an IPTV system wherein video packets are transmitted from a video distribution server (DS) to said client via a network,
said packet reception controller being adapted to detect problems with video packets received from said video distribution server and to request retransmission of a video packet associated to said problem,
***characterized in that*** said packet reception controller (PRC) is further adapted to request the retransmission of a next video packet based on a parameter received with the current video packet and indicative of the relative importance of said next video packet in the transmission sequence.

8. A packet reception controller (PRC) for a client (CL) of an IPTV system wherein video packets are transmitted from a video distribution server (DS) to said client via a network,
said packet reception controller being adapted to detect problems with video packets received from said video distribution server and to request retransmission of a video packet associated to said problem,
***characterized in that*** said packet reception controller (PRC) is further adapted to request the retransmission of a current video packet based on a parameter received with this current video packet and indicative of the relative importance of said current video packet in the transmission sequence.

9. A method for requesting retransmission of video packets by a client (CL) in an IPTV system comprising a video distribution server (DS) transmitting video packets to said client via a network,
the method comprising the steps of:
- said client requesting the retransmission of a packet upon detection of a problem, and
- said video distribution server keeping the video packets transmitted to said client and retransmitting a packet upon request of said client,
***characterized in that*** said method further comprises the steps of:
- including in each transmitted video packet a parameter indicative of the relative importance of the next video packet in the transmission sequence, and
- said client (CL) requesting the retransmission of a next video packet based on said parameter.

10. A method for requesting retransmission of video packets by a client (CL) in an IPTV system comprising a video distribution server (DS) transmitting video packets to said client via a network,
the method comprising the steps of:
- said client requesting the retransmission of a packet upon detection of a problem, and
- said video distribution server keeping the video packets transmitted to said client and retransmitting a packet upon request of said client,
***characterized in that*** said method further comprises the steps of:
- including in each transmitted video packet a parameter indicative of the relative importance of this current video packet, and
- said client (CL) requesting the retransmission of said current video packet based on said parameter.

11. The method according to any of the claims 9 or 10,
***characterized in that*** said method further comprises the steps of:
- including in each transmitted video packet other parameters, such as the priority of said packet, the server capabilities, the load of said network and/or the scene currently played, and
- said client (CL) requesting the retransmission of a video packet based on said other parameters.
